**Europäisches Patentamt**

**European Patent Office**

**Office européen des brevets**

(19)

(11) Veröffentlichungsnummer : **0 330 889 B1**

(12)

# EUROPÄISCHE PATENTSCHRIFT

(45) Veröffentlichungstag der Patentschrift :
**02.09.92 Patentblatt 92/36**

(51) Int. Cl.$^5$ : **B01J 2/10,** C08K 9/08,
**B01J 2/28**

(21) Anmeldenummer : **89102371.5**

(22) Anmeldetag : **10.02.89**

(54) **Verfahren zur Herstellung von nichtstaubenden, metallhaltigen Stabilisatorgranulaten für halogenhaltige Polymere.**

(30) Priorität : **29.02.88 DE 3806420**

(43) Veröffentlichungstag der Anmeldung :
**06.09.89 Patentblatt 89/36**

(45) Bekanntmachung des Hinweises auf die
Patenterteilung :
**02.09.92 Patentblatt 92/36**

(84) Benannte Vertragsstaaten :
**AT BE CH DE ES FR GB GR IT LI LU NL SE**

(56) Entgegenhaltungen :
**DE-A- 2 646 965
DE-A- 3 020 255
FR-A- 1 081 320**

(73) Patentinhaber : **Bärlocher GmbH
Riesstrasse 16
W-8000 München 50 (DE)**

(72) Erfinder : **Rosenthal, Michael, Dr.
Zentnerstrasse 20
W-8000 München 40 (DE)**
Erfinder : **Ausserbauer, Valentin
Tiefer Weg 6
W-4450 Lingen (DE)**
Erfinder : **Pürzer, Albert, Dr.
Agricolastrasse 69
W-8000 München 21 (DE)**

(74) Vertreter : **Patentanwälte Grünecker,
Kinkeldey, Stockmair & Partner
Maximilianstrasse 58
W-8000 München 22 (DE)**

EP 0 330 889 B1

**Beschreibung**

Die Erfindung betrifft ein Verfahren zur kontinuierlichen Herstellung von nichtstaubenden, metallhaltigen Stabilisatorgranulaten für halogenhaltige Polymere, insbesondere PVC.

Für die Verarbeitung von halogenhaltigen Polymeren, wie Polyvinylchlorid, werden zur Vermeidung der Halogenwasserstoffabspaltung Thermostabilisatoren eingesetzt. Als wirkungsvolle Stabilisierungssysteme für Hart- und Weich-PVC haben sich vor allem Bleiverbindungen bewährt, die in großem Umfang eingesetzt werden. Typische Anwendungsgebiete für den Einsatz von Bleistabilisatoren sind PVC-Kabelmassen, -Rohre, -Rolladen, -Spritzgußteile und -Fensterprofile.

Wegen der Toxizität der Bleiverbindungen und zur Vermeidung bleihaltiger Stäube bei der Verarbeitung werden bereits in großem Umfang nichtstaubende Stabilisatorgranulate eingesetzt. Diese werden im allgemeinen, wie in DE-PS 15 69 190 und DE-PS 17 94 429 beschrieben, nach einem Schmelzverfahren hergestellt. Hierbei werden die anorganischen Bleiverbindungen in der Schmelze von rein organischen Gleitmitteln und Metallseifen dispergiert, und anschliessend erfolgt die Granulierung durch Versprühen oder Abkühlung auf Schuppenwalzen. Weitere bekannte Vorrichtungen zur Granulierung von Bleistabilisatoren sind Zahnradgranulatformmaschinen und Strangpressen.

Die DE-OS 30 20 255 beschreibt ein Verfahren zur Herstellung von nichtstaubenden Metallsalzen und/oder Metallseifen durch Umsetzen von Metalloxid und/oder -hydroxid und/oder -carbonat unter intensivem Durchmischen mit den gewünschten Säuren in Gegenwart von Wasser. Für alle geschilderten Verfahren ist ein vergleichsweise hoher apparativer Aufwand erforderlich. Weiterhin erlauben diese Verfahren nur eine diskontinuierliche Produktionsweise. Für die Schmelzprozesse ist zusätzlich ein hoher Energieaufwand erforderlich.

Aufgabe der Erfindung ist es, ein Verfahren zur Herstellung von nichtstaubenden, metallhaltigen, gut dispergierbaren Stabilisatorgranulaten anzugeben, das kontinuierlich durchgeführt werden kann und einen geringen apparativen Aufwand sowie geringen Energieaufwand erfordert.

Diese Aufgabe wird erfindungsgemäß durch ein Verfahren der eingangs genannten Art dadurch gelöst, daß man pulverförmige, metallhaltige Stabilisatoren in das obere Ende eines senkrecht stehenden, zylinderförmigen Granulators mit einer darin konzentrisch angeordneten, schnell rotierenden Welle, vorzugsweise bei Umdrehungszahlen der Welle von ca. 1000-3000 U/min, auf der Mischwerkzeuge mit einstellbarem Angriffswinkel befestigt sind, einführt und mit einer wässrigen Emulsion eines Bindemittels, die geringe Anteile, vorzugsweise ca. 1-2 Gew.-%, eines Emulgators enthält und seitlich am oberen Ende des Granulators eingedüst wird, granuliert.

Beim erfindungsgemäßen Verfahren ist es wesentlich, daß die Granulierung in einem zylinderförmigen Granulator mit einer darin konzentrisch angeordneten, schnell rotierenden Welle, vorzugsweise bei ca. 1000-3000 U/min, erfolgt. Die auf der Welle befestigten Mischwerkzeuge können jede geeignete Form aufweisen, die bewirkt, daß die durch die Schwerkraft sich nach unten bewegenden, pulverförmigen Stabilisatoren in heftige Turbulenz versetzt werden. Vorzugsweise besitzen die Mischwerkzuge die Form von Mischmessern oder Schlägern, die vorzugsweise V-förmig, isbesondere bevorzugt abwechselnd gerade und V-förmig ausgebildet sein können. Durch geeignete Anordnung und Einstellung der Angriffswinkel der Mischwerkzeuge kann die gewünschte Mischwirkung erzielt werden. In den turbulenten Strom aus pulverförmigen Stabilisatoren wird dann seitlich am oberen Rand des zylinderförmigen

Granulators die wässrige Emulsion eingedüst, die aus Wasser, Bindemittel und geringen Anteilen an Emulgatoren besteht.

Vorzugsweise wird eine wässrige Emulsion verwendet, die ca. 10-35 Gew.-% Bindemittel und ca. 1-2 Gew.-% Emulgator enthält.

Als Bindemittel werden vorzugsweise feste, organische Gleitmittel für halogenhaltige Polymere eingesetzt, die oberhalb Raumtemperatur schmelzen. Insbesondere eignen sich hierfür Fettalkohole, wie Stearylalkohol, Fettsäureester, Fettsäuren und/oder Paraffinwachs.

Als Emulgatoren können nichtionisches oder ionische, insbesondere anionische Verbindungen eingesetzt werden. Geeignete Beispiele hierfür sind Natriumlaurylsulfat, Natriumdodecyl-Benzylsulfonat oder Alkylpolyglykoläther.

Als metallhaltige Stabilisatoren können beim erfindungsgemäßen Verfahren anorganische und/oder organische Salze von Blei, Barium, Zink, Kalzium, Magnesium oder Cadmium, einzeln oder als Kombination mindestens zweier dieser Salze, eingesetzt werden. Als anorganische und/oder organische Bleisalze werden vorzugsweise basische Bleisalze aus der Gruppe dreibasisches Bleisulfat, vierbasisches Bleisulfat, zweibasisches Bleiphosphit, zweibasisches Bleiphthalat, basisches Bleikarbonat und zweibasisches Bleistearat eingesetzt.

Falls erwünscht, können zusammen mit den pulverförmigen Stabilisatoren übliche Verarbeitungshilfsmittel, Antioxidantien, Füllstoffe und/oder Pigmente eingeführt werden.

Zur Entfernung des Restwassergehaltes der erhaltenen Granulate können diese ebenfalls in kontinuierlicher Arbeitsweise durch einen Wirbelbett-Trockner geführt werden.

Die Erfindung wird nachfolgend unter Bezugnahme auf die Zeichnungen näher erläutert. Hierbei zeigen:

Fig. 1 eine schematische Darstellung eines zur Durchführung des erfindungsgemäßen Verfahrens geeigneten Granulators (Antriebsmotor nicht gezeigt) und

Fig. 2 in schematischer Darstellung ein Fließdiagramm zur Durchführung des erfindungsgemäßen Verfahrens.

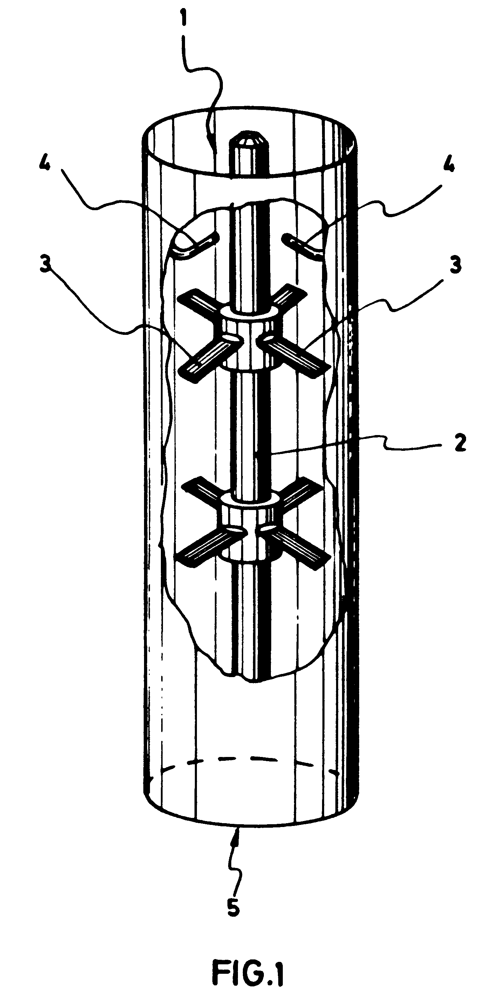

Wie in Fig. 1 gezeigt, werden die pulverförmigen, metallhaltigen Stabilisatoren am oberen Ende 1 eines senkrecht stehenden, zylinderförmigen Granulators eingeführt. Innerhalb des zylinderförmigen Granulators befindet sich eine konzentrisch angeordnete, schnell rotierende Welle 2, auf der Mischwerkzeuge 3 mit einstellbarem Angriffswinkel befestigt sind. Die pulverförmigen Stabilisatoren werden durch die schnellrotierenden Mischwerkzeuge in heftige Turbulenz versetzt. In diesen turbulenten Strom aus pulverförmigen Stabilisatoren wird dann seitlich am oberen Ende des Granulators über Düsen 4 die wässrige Bindemittelemulsion eingedüst. Der Pulver-/Flüssigkeits-Strom bewegt sich in einer spiralförmigen Bahn an der Granulatorwand entlang zum Auslaß 5 des Granulators. Die Angriffswinkel und die Rotationsgeschwindigkeit der Mischwerkzeuge bestimmen die Verweilzeit des zu granulierenden Guts in der Granulierzone. Selbst bei einer Durchsatzleistung von ca. 1000 kg pro Stunde beträgt die durchschnittliche Durchlaufzeit nur ca. 1 Sekunde. Der Granulierpunkt ist erreicht, wenn die Pulverpartikel von der Flüssigkeit über die gesamte Oberfläche benetzt werden.

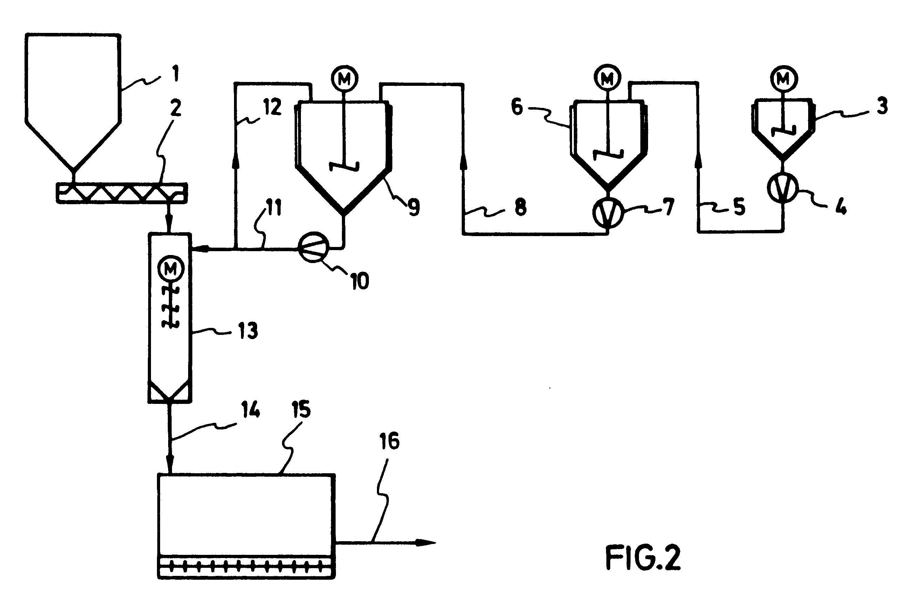

Wie beispielhaft in Fig. 2 gezeigt, umfaßt eine Anlage zur Durchführung des erfindungsgemäßen Verfahrens einen wahlweise mit einer Mischeinrichtung versehenen Vorratsbehälter 1 für die pulverförmigen, metallhaltigen Stabilisatoren. Die pulverförmigen Stabilisatoren werden über eine Dosierschnecke 2 am oberen Ende des Granulators 13 eingeführt. Im Behälter 3 wird eine wässrige Emulgatorlösung hergestellt. Getrennt hiervon wird in einem beheizbaren Behälter 6 eine wässrige Bindemitteldispersion zubereitet. Über die Dosierpumpe 4 und Leitung 5 wird die Emulgatorlösung dem Behälter 6 zugeleitet und unter starkem Rühren der Bindemitteldispersion zugegeben. Die hierbei erhaltene Emulsion wird über die Dosierpumpe 7 und Leitung 8 in den Emulsionsvorratsbehälter 9 eingespeist. Von hier wird die Emulsion über die Dosierpumpe 10 und Leitung 11 seitlich am oberen Ende des Granulators 13 eingedüst. Im Bedarfsfall kann die Emulsion über Leitung 12 dem Behälter 9 rückgeführt werden. Das aus dem Granulator austretende Granulat wird über die Abzugsleitung 14 durch den Wirbelbettrockner 15 geführt, von dem über Leitung 16 das Endprodukt abgenommen wird. Falls erwünscht, kann über eine nachgeschaltete Siebanlage eine Klassifizierung der nichtstaubenden Stabilisatorgranulate vorgenommen werden.

Mit Hilfe des erfindungsgemäßen Verfahrens ist es möglich, ohne den bei den erwähnten bekannten Verfahren durchgeführten Schmelzprozeß und ohne nachträgliche Verformung zu gleichmäßigen, hochwirksamen, feinen, jedoch staubfreien Granulaten zu gelangen. Der Bindemittelanteil im fertigen Granulat liegt unter 10 %, vorzugsweise zwischen 4 und 7 %. Die erfindungsgemäß hergestellten Stabilisatorgranulate zeichnen sich daher durch einen hohen Stabilisatorgehalt mit nur geringem Gleitmittelanteil aus. Die Partikelgrössenverteilung kann durch Einstellung des Granulators auf 125 bis 500 µm eingestellt werden. Die erfindungsgemäß hergestellten freifließenden, sphärischen Granulate eignen sich besonders für automatische Dosiersysteme, pneumatische Förderung und kontinuierliche Aufbereitung. Die bei herkömmlichen Granulaten in Schuppen- oder Stäbchenform auftretenden Dosierprobleme und Brückenbildungen sind bei den erfindungsgemäß hergestellten Granulaten nicht zu beobachten.

Die erfindungsgemäß hergestellten Granulate zeigen ausgezeichnete Verteilungseigenschaften und entsprechen in ihrer Wirksamkeit den pulverförmigen Grundkomponenten. Dies erlaubt eine wirtschaftliche Verwendung dieser Produkte ohne Mehreinsatz im Vergleich zu den pulverförmigen Einzelkomponenten.

Die nachfolgenden Beispiele erläutern die Erfindung.

Beispiel 1:

a) Herstellung der Emulsion

20 kg Wasser und 6 kg Stearylalkohol werden zusammen auf 65°C erhitzt. In einem zweiten Behälter werden 0,5 kg Natriumlaurylsulfat als Emulgator in 3,5 kg Wasser gelöst. Anschließend wird die Emulgatorlösung unter starkem Rühren zu dem im Wasser aufgeschmolzenen Stearylalkohol gegeben. Es entsteht eine dünne, sprühfähige Emulsion.

b) Granulierung

Dreibasisches Bleisulfat und die beschriebene Emulsion werden im Gewichtsverhältnis von 8 : 2,04 in den Granulator dosiert. Das aus dem Granulator austretende Granulat , wird zur Entfernung von Restwasser im Wirbelbett getrocknet. Es entsteht ein feines, rieselfähiges staubfreies Granulat.

Zusammentetzung des Granulats :

| | |
|---|---|
| Dreibasisches Bleisulfat | 94,76 % |
| Stearylalkohol | 4,86 % |
| Natriumlaurylsulfat | 0,38 % |
| Glührückstand | 91,5 - 92,5 % |
| Granulatanteil mit 125-500 µm | 82 % |

Verteilungsprüfung:

Hierbei handelt es sich um eine Prüfung zur Beurteilung der Verteilungseigenschaften von Stabilisatorgranulaten. Nach der unten angegebenen Prüfrezeptur wird ein Walzfell angefertigt und visuell mit Hilfe einer Lupe beurteilt. Falls keine weißen Stippen festgestellt werden, gilt diese Prüfung als bestanden und wird mit vollständiger Verteilung bezeichnet.

Stabilisatorgranulate, die diese Prüfung bestehen, können erfahrungsgemäß auch für qualitativ hochwertige Anwendungen, wie dünne Telefonadern oder Weichfolien eingesetzt werden, selbst unter Verwendung von Aufbereitungsanlagen mit geringer Scherwirkung.

100,00 Teile S-PVC, K-Wert 70
30,00 Teile Weichmacher/Dioctylphthalat
0,50 Teile neutrales Bleistearat
0,70 Teile Rußpaste 10 %ig
10,00 Teile Stabilisatorgranulat

Nach einer Walzzeit von 3 Minuten bei 180°C wird ein stippenfreies Walzfell mit vollständiger Verteilung des Stabilisatorgranulats erhalten.

Stabilitätsprüfung

1) HCl-Gasabspaltungstest bei 190°C:

Die Prüfung der thermischen Stabilität gemäß diesem Test erfolgt analog der Vorschrift DIN-VDE 0472, Teil 614. Hierzu werden nach den unten angegebenen Rezepturen a) und b) Prüfkörper hergestellt. Prüfkörper von je 50 mg werden im Glasröhrchen bei 190 ± 1°C im Ölbad erwärmt und die Zeit gemessen, bis ein am offenen Ende des Glasröhrchens angebrachtes Universalindikatorpapier bei pH = 3 nach rot umschlägt.

Sowohl Prüfkörper auf Basis der erfindungsgemäß hergestellten Stabilisatorgranulate nach Rezeptur a) als auch auf Basis der entsprechenden Einzelkomponenten nach Rezeptur b) ergeben übereinstimmend eine Stabilität von ca. 190 Minuten. Dies zeigt, daß die erfindungsgemäße Granulierung keine Verschlechterung der Wirksamkeit der Stabilisatorkomponenten ergibt.

2) Ofentest bei 190°C:

Die Prüfung der statischen Thermostabilität wird in einem Mathis-Ofen mit vorprogrammiertem, automatisiertem Probenausschub vorgenommen. Die Prüftemperatur beträgt 190°C und der Probenausschub erfolgt alle 10 Minuten.

Nach ca. 150 Minuten verfärben sich die Prüfstreifen auf Basis der angegebenen Rezepturen nach dunkelbraun/schwarz und zeigen damit den für PVC typischen thermischen Abbau. Es ergeben sich ebenfalls keinerlei signifikanten Abweichungen zwischen den Prüfstreifen auf Basis der erfindungsgemäß hergestellten Stabilisatorgranulate nach Rezeptur a) und den Prüfstreifen auf Basis der Einzelkomponenten nach Rezeptur b). Dies zeigt ebenfalls, daß durch die erfindungsgemäße Granulierung keinerlei Verlust der Wirksamkeit der Stabilisatorkomponenten eintritt.

a) 100,00 Teile S-PVC, K-Wert 70
30,00 Teile Weichmacher/Dioctylphthalat
0,20 Teile Paraffinwachs

5,00 Teile Stabilisatorgranulat
b) 100,00 Teile S-PVC, K-Wert 70
30,00 Teile Weichmacher/Dioctylphthalat
0.20 Teile Paraffinwachs
4,75 Teile dreibasisches Bleisulfat
0,25 Teile Stearylalkohol

Beispiel 2:

a) Herstellung der Emulsion

11 kg Wasser und 6 kg Talgfettalkohol werden auf 65 °C erhitzt. 0,235 kg Natriumlaurylsulfat als Emulgator werden in 5,765 kg Wasser aufgelöst. Anschließend erfolgt Zugabe der Emulgatorlösung unter starkem Rühren zu dem im Wasser aufgeschmolzenen Talgfettalkohol. Es entsteht wie bei Beispiel 1 eine dünne, sprühfähige Emulsion.

b) Granulierung

Als Stabilisator wurde dibasisches Bleiphosphit verwendet. Als Dosiergeschwindigkeit wurde wie bei Beispiel 1 ein Gewichtsverhältnis dibasisches Bleiposphat zu Emulsion von 8 : 2,04 angewandt. Das aus dem Granulator austretende Granulat wird zur Entfernung von Restwasser im Wirbelbett getrocknet. Es entsteht ein feines,rieselfähiges, staubfreies Granulat.

Zusammensetzung des Granulats:

| | |
|---|---|
| Dibasisches Bleiphosphit | 93,54 % |
| Talgfettalkohol | 6,22 % |
| Natriumlaurylsulfat | 0,24 % |
| Granulatanteil mit 125-500 μm | 79 % |

Verteilungseigenschaften und Thermostabilität des Granulats entsprechen den pulverförmigen Einzelkomponenten.

Beispiel 3

a) Herstellung der Emulsion:

12 kg Wasser und 6 kg Stearylalkohol werden zusammen auf 65°C erhitzt. In einem zweiten Behälter werden 0,24 kg Dehydol 150 (Handelsbezeichnung der Firma Henkel für Fettalkoholpolyglykolether) als Emulgator in 6,0 kg Wasser gelöst. Anschließend wird die Emulgatorlösung unter starkem Rühren zu dem in Wasser augeschmolzenen Stearylalkohol gegeben. Es entsteht eine dünne, sprühfähige Emulsion.

b) Granulierung

Dibasisches Bleiphthalat und die beschriebene Emulsion werden im Gewichtsverhältnis von 8 zu 2,04 in den Granulatordosiert. Das aus dem Granulator austretende Granulat wird zur Entfernung von Restwasser im Wirbelbett getrocknet. Es entsteht ein feines, rieselfähiges, staubfreies Granulat.

Zusammentetzung des Granulats :

| | |
|---|---|
| Dibasisches Bleiphtalat | 94,02 % |
| Stearylalkohol | 5,94 % |
| Glührückstand | 73,4 % |
| Granulatanteil mit 125-500 μm: | 79,5 % |

Verteilungseigenschaften und Thermostabilität des Granulats entsprechen den pulverförmigen Einzelkomponenten.

Beispiel 4

a) Herstellung der Emulsion

18 kg Wasser und 6 kg Stearylalkohol werden auf 65°C erhitzt. 0,50 kg Dehydol TA 30 (Handelsbezeichnung der Firma Henkel für Fettalkoholpolyglykolether) als Emulgator werden in 6,0 kg Wasser aufgelöst. Anschließend erfolgt Zugabe der Emulgatorlösung unter starkem Rühren zu dem in Wasser aufgeschmolzenen Stearylalkohol. Es entsteht wie bei Beispiel 1 eine dünne, sprühfähige Emulsion.

b) Granulierung

Als Stabilisator wird Bärostab ZPS-X (Handelsbezeichnung der Firma Chemische Werke München, Otto Bärlocher GmbH für einen pulverförmigen Barium/Cadmium-Mischstabilisator auf Laurinsäurebasis mit Barium-Gehalt = 7,7 % und Cadmium-Gehalt =12,8 %) verwendet. Als Dosiergeschwindigkeit wird wie bei Beispiel 1 ein Gewichtsverhältnis Bärostab ZPS-X zu Emulsion von 8 : 2,04 angewandt. Das aus dem Granulator austretende Granulat wird zur Entfernung von Restwasser im Wirbelbett getrocknet. Es entsteht ein feines, rieselfähiges, staubfreies Granulat.

**Patentansprüche**

1.  Verfahen zur kontinuierlichen Herstellung von nichtstaubenden, metallhaltigen Stabilisatorgranulaten für halogenhaltige Polymere, insbesondere PVC,
    dadurch **gekennzeichnet,**
    daß man pulverförmige, metallhaltige Stabilisatoren in das obere Ende eines senkrecht stehenden, zylinderförmigen Granulators mit einer darin konzentrisch angeordneten, schnell rotierenden Welle, vorzugsweise bei Umdrehungszahlen der Welle von ca. 1000-3000 U/min, auf der Mischwerkzeuge mit einstellbarem Angriffswinkel befestigt sind, einführt und mit einer wäßrigen Emulsion eines Bindemittels, die geringe Anteile, vorzugsweise ca. 1-2 Gew.-%, eines Emulgators enthält und seitlich am oberen Ende des Granulators eingedüst wird, granuliert.

2.  Verfahren nach Anspruch 1, dadurch gekennzeichnet, daß die Mischwerkzeuge die Form von Messern oder Schlägern besitzen.

3.  Verfahen nach einem der Ansprüche 1 und/oder 2, dadurch gekennzeichnet, daß man eine wäßrige Emulsion verwendet, die ca. 10-35 Gew.-% Bindemittel und ca. 1-2 Gew.-% Emulgator enthält.

4.  Verfahren nach einem der Ansprüche 1 bis 3, dadurch gekenneichnet, daß man als Bindemittel feste, organische Gleitmittel für halogenhaltige Polymere einsetzt, die oberhalb Raumtemperatur schmelzen.

5.  Verfahren nach Anspruch 4, dadurch gekennzeichnet, daß man als Bindemittel Fettalkohole, Fettsäureester, Fettsäuren und/oder Paraffinwachse einsetzt.

6.  Verfahren nach einem der Ansprüche 1 bis 5, dadurch gekennzeichnet, daß man als Emulgatoren ionische oder nichtionische Verbindungen einsetzt.

7.  Verfahren nach Anspruch 6, dadurch gekennzeichnet, daß man als Emulgatoren Natriumlaurylsulfat, Natriumdodecyl-Benzylsulfonat oder Alkylpolyglykolether einsetzt.

8.  Verfahren nach einem der Ansprüche 1 bis 7, dadurch gekenneichnet, daß man als metallhaltige Stabilisatoren anorganische und/oder organische Salze von Blei, Barium, Zink, Kalzium, Magnesium oder Cadmium einzeln oder als Kombination mindestens zweier dieser Salze einsetzt.

9.  Verfahren nach Anspruch 8, dadurch gekennzeichnet, daß man als metallhaltige Stabilisatoren anorganische und/oder organische, basische Bleisalze aus der Gruppe dreibasisches Bleisulfat, vierbasisches Bleisulfat, zweibasisches Bleiphosphit, zweibasisches Bleiphthalat, basisches Bleikarbonat und zweibasisches Bleistearat einsetzt.

10. Verfahren nach einem der Ansprüche 1 bis 9, dadurch gekenneichnet, daß man zusammen mit den pulverförmigen Stabilisatoren Verarbeitungshilfsmittel, Antioxidantien, Füllstoffe und/oder Pigmente einsetzt.

11. Verfahren nach einem der Ansprüche 1 bis 10, dadurch gekennzeichnet, daß man die erhaltenen Granulate zur Entfernung des Restwassergehaltes durch einen Wirbelbett-Trockner führt.

## Claims

1. A method of continuously producing non-dusty metal-containing stabiliser granulates for halogencontaining polymers, more particularly PVC, characterised in that pulverulent metal-containing stabilisers are introduced into the top end of a vertical cylindrical granulator containing a concentric shaft, rotating rapidly preferably at speeds of about 1000 - 3000 rpm, mixing tools being secured to the shaft at adjustable angles of engagement, and are granulated with an aqueous emulsion of a binder containing small proportions, preferably about 1 - 2 wt.%, of an emulsifier and sprayed at the side into the top end of the granulator.

2. A method according to claim 1, characterised in that the mixing tools are in the form of knives or beaters.

3. A method according to claim 1 or 2, characterised in that an aqueous suspension containing about 10 - 35 wt.% binder and about 1 - 2 wt.% emulsifier is used.

4. A method according to any of claims 1 to 3, characterised in that the binders are solid organic lubricants for halogen-containing polymers and melt at above room temperature.

5. A method according to claim 1, characterised in that the binders are fatty alcohols, fatty acid esters, fatty acids and/or paraffin waxes.

6. A method according to any of claims 1 to 5, characterised in that the emulsifiers are ionic or nonionic compounds.

7. A method according to claim 6, characterised in that the emulsifiers are sodium lauryl sulphate, sodium dodecyl benzyl sulphonate or alkyl polyglycol ether.

8. A method according to any of claims 1 to 7, characterised in that the metal-containing stabilisers are inorganic and/or organic salts of lead, barium, zinc, calcium, magnesium or cadmium, singly or in combinations of at least two of these salts.

9. A method according to claim 8, characterised in that the metal-containing stabilisers are inorganic and/or organic lead salts from the group comprising tribasic lead sulphate, tetrabasic lead sulphate, dibasic lead phosphite, dibasic lead phthalate, basic lead carbonate and dibasic lead stearate.

10. A method according to any of claims 1 to 9, characterised in that processing aids, anti-oxidising agents, fillers and/or pigments are used together with the pulverulent stabilisers.

11. A method according to any of claims 1 to 10, characterised in that the resulting granulates are freed from residual water by conveying through a fluidised-bed drier.

## Revendications

1. Procédé de préparation en continu de granulés de stabilisateur non poussiéreux contenant du métal pour les polymères contenant des halogènes, en particulier le PVC, characterisé en ce que l'on introduit des stabilisateurs en forme de poudre, contenant du métal, dans l'extrémité d'un granulateur de forme cylindrique, placé verticalement, à arbre à rotation rapide, de préférence à des vitesses de l'arbre d'environ 1000 à 3000 t/min., disposé concentriquement dans celui-ci, sur lequel sont fixés des outils mélangeurs à angle d'attaque réglable, et qu'on les granule avec une émulsion aqueuse d'un liant qui contient de faibles proportions, de préférence d'environ 1 à 2% en poids, d'un émulsionnant et qui est introduite, par pulvérisation, latéralement à l'extrémité supérieure du granulateur.

2. Procédé suivant la revendication 1, caractérisé en ce que les outils mélangeurs ont la forme de lames ou de batteurs.

3. Procédé suivant l'une des revendications 1 et/ou 2, caractérisé en ce qu'on utilise une émulsion aqueuse qui contient d'environ 10 à 35% en poids de liant et d'environ 1 à 2% en poids d'émulsionnant.

4. Procédé suivant l'une des revendications 1 à 3, caractérisé en ce qu'on utilise, comme liant, des lubrifiants organiques solides pour les polymères contenant des halogènes, qui fondent au-dessus de la température ambiante.

5. Procédé suivant la revendication 4, caractérisé en ce qu'on utilise, comme liant, des alcools gras, des esters d'acides gras, des acides gras et/ou de la cire paraffine.

6. Procédé suivant l'une des revendications 1 à 5, caractérisé en ce qu'on utilise, comme émulsionnants, des liaisons ioniques ou non-ioniques.

7. Procédé suivant la revendication 6, caractérisé en ce qu'on utilise, comme émulsionnants, du sulfate de sodium-lauroyle, du sulfonate de sodium-dodécyl-benzyle ou de l'éther d'alkyl-polyglycol.

8. Procédé suivant l'une des revendications 1 à 7, caractérisé en ce qu'on utilise, comme stabilisteurs contenant du métal, des sels inorganiques et/ou organiques de plomb, de baryum, de zinc, de calcium, de magnésium ou de cadmium, soit seuls, soit comme combinaison d'au moins deux de ces sels.

9. Procédé suivant la revendication 6, caractérisé en ce qu'on utilise, comme stabilisteurs contenant du métal, des sels de plomb basiques, inorganiques et/ou organiques, du groupe de sulfate de plomb tribasique, sulfate de plomb tétrabasique, phosphite de plomb dibasique, phtalate de plomb dibasique, carbonate de plomb basique et stéarate de plomb dibasique.

10. Procédé suivant l'une des revendications 1 à 9, caractérisé en ce qu'on utilise, esemble avec les stabilisateurs sous forme de poudre, des adjuvants de transformation, des anti-oxydants, des charges et/ou des pigments.

11. Procédé suivant l'une des revendications 1 à 10, caractérisé en ce qu'on fait passer les granulés obtenus dans un sécheur à lit tourbillonnant pour éliminer la teneur en eau résiduelle.

FIG.1

FIG.2